# FASCICULE DE BREVET EUROPEEN

(11) **EP 4 085 211 B1**
(45) Date de publication et mention de la délivrance du brevet: **10.07.2024**
(21) Numéro de dépôt: 20838578.1
(22) Date de dépôt: 30.12.2020
(51) Int. Cl.: F16L 5/10, B29C 45/00, E04B 2/00, F16L 5/14, H02G 3/22

(54) **DISPOSITIF POUR UN PASSAGE ÉTANCHE D'ÉLÉMENTS LONGITUDINAUX AU TRAVERS D'UNE CLOISON**
VORRICHTUNG ZUM ABGEDICHTETEN DURCHFÜHREN VON LÄNGSELEMENTEN DURCH EINE TRENNWAND
DEVICE FOR A SEALED PASSAGE OF LONGITUDINAL ELEMENTS THROUGH A PARTITION

(30) Priorité: 30.12.2019 FR 1915731
(43) Date de publication de la demande: 09.11.2022
(73) Titulaire: EXAIL, 78100 Saint-Germain-en-Laye (FR)
(72) Inventeur: GRALL, Sébastien, 78100 Saint-Germain-en-Laye (FR); LALLEMAND, Pierre, 78100 Saint-Germain-en-Laye (FR); MURIER, Frédéric, 78100 Saint-Germain-en-Laye (FR); SECCO, Lionel, 78100 Saint-Germain-en-Laye (FR)
(74) Mandataire: Jacobacci Coralis Harle
(86) Numéro de dépôt international: PCT/EP2020/088031
(87) Numéro de publication internationale: WO 2021/136806

(56) Documents cités:
- EP-A1- 0 967 425
- EP-A1- 1 236 943
- EP-A1- 1 279 877

## Description

L'invention concerne le domaine de la construction, en particulier du second oeuvre, et trouve une application particulière dans le domaine maritime. Plus précisément, l'invention concerne un dispositif étanche pour le passage d'éléments longitudinaux tels que des câbles et/ou de conduites au travers une cloison.

Dans le domaine ci-dessus, il est connu, afin de faire passer des câbles ou conduites au travers d'une cloison, de réaliser un trou débouchant dans la cloison et d'y fixer un châssis, par exemple une bague, de façon que la bague délimite le trou, et de faire passer les câbles et conduites au travers de la cloison en les faisant passer dans le châssis. Ce type d'installation est communément désigné par l'homme du métier sous les termes « passe-câbles », « passe-fils », « presse-étoupe » ou, dans le domaine maritime, sous le terme « surbau ». Le document EP 1 236 943 A divulgue une bague de traversée de cloison destinée à être montée dans un trou d'une cloison séparant le compartiment moteur de l'habitacle d'un véhicule.

Lors de la réalisation d'un passe-câbles, il convient parfois de préserver l'étanchéité de la cloison. C'est notamment le cas dans le domaine maritime dans lequel les cloisons délimitant des compartiments sont susceptibles d'être immergées et doivent donc être étanches aux liquides, mais aussi dans d'autres domaines dans lequel une étanchéité aux gaz peut être nécessaire.

Afin d'atteindre cet objectif, une solution consiste à remplir par coulée l'intégralité du volume du trou délimité par le châssis autour des câbles par un matériau assurant l'étanchéité, par exemple du mastic ou de la résine.

Bien que cette solution assure une étanchéité satisfaisante, elle présente l'inconvénient de ne pas être démontable. En effet, afin d'enlever ou de rajouter un câble au travers de la cloison, il est nécessaire de retirer, ou du moins d'endommager, le matériau assurant l'étanchéité, puis de procéder à une nouvelle coulée une fois l'opération terminée. Puisque classiquement le châssis est fixé à demeure à la cloison, cette opération est fastidieuse.

Une autre solution consiste à équiper la paroi interne du châssis avec une membrane rétractable commandée par un dispositif de serrage, et d'actionner le dispositif de serrage de façon que la membrane vienne écraser les câbles et assurer ainsi l'étanchéité du passe-câbles.

Cela étant, bien que cette solution permette d'ajouter ou de retirer des câbles sans endommager le passe-câbles, elle ne permet pas d'assurer une étanchéité suffisante et s'avère donc inadaptée pour les applications maritimes et/ou pour assurer une étanchéité aux gaz.

Il existe donc un besoin de fournir un passe-câbles présentant à la fois une étanchéité suffisante et une souplesse d'utilisation permettant d'ajouter et de retirer facilement et rapidement des câbles.

Ainsi, selon un aspect, il est proposé un dispositif pour le passage étanche d'au moins un élément longitudinal au travers d'un trou débouchant ménagé dans une cloison selon la revendication 1.

Il est ainsi avantageusement possible de séparer aisément l'insert amovible, qui fait ici office de passe-câbles à proprement parler, du châssis, et donc d'ajouter et de retirer des éléments longitudinaux de façon simple, notamment à distance de la cloison. En outre, la partie centrale épousant de façon intime l'élément longitudinal assure une bonne étanchéité entre ces deux éléments.

Une réalisation par moulage permet avantageusement de s'assurer que tout l'espace non occupé par l'élément longitudinal est occupé par le matériau étanche. En outre, grâce au moulage, l'insert amovible est adapté à des éléments longitudinaux de toute forme, notamment des éléments longitudinaux dont la section est irrégulière.

La partie centrale réalisée par moulage est tout particulièrement adaptée à des éléments longitudinaux non rectilignes. Par exemple, la partie amovible réalisée par moulage est adaptée à des éléments longitudinaux repliés sur eux même, c'est-à-dire formant des boucles ou des noeuds, ainsi que des éléments longitudinaux mutuellement emmêlés, par exemple tressés. Cela contribue à améliorer l'étanchéité du dispositif quel que soit la forme et la disposition des éléments longitudinaux.

Enfin, une réalisation par moulage permet une meilleure adhésion entre les éléments longitudinaux et l'insert amovible, ce qui contribue à améliorer l'étanchéité du dispositif.

L'insert amovible comporte une partie tubulaire qui entoure la partie centrale et dans laquelle la partie centrale est moulée, la partie tubulaire restant à demeure autour de la partie centrale après moulage de la partie centrale et formant une liaison étanche avec le châssis lors de l'insertion de l'insert amovible.

L'emploi d'un insert amovible comportant une cloison permet avantageusement de s'affranchir de l'utilisation d'un moule provisoire pour la réalisation de la partie centrale. L'utilisation du dispositif est ainsi simplifiée.

L'insert amovible peut comporter une collerette d'insert formant butée pour limiter la course d'insertion de l'insert amovible dans le trou.

La collerette d'insert peut comporter un prolongement de ladite partie tubulaire.

Le châssis peut comporter une collerette de châssis apte à venir en butée contre ladite cloison.

La collerette de châssis permet avantageusement une meilleure fixation du châssis à la cloison en évitant que celui-ci ne glisse dans le trou débouchant, et permet notamment d'améliorer l'étanchéité entre le châssis et la cloison.

Le dispositif comporte au moins une bague intercalaire disposée entre le châssis et l'insert amovible, configurée pour assurer l'étanchéité entre le manchon et l'insert amovible.

La bague intercalaire peut être réalisée dans un matériau élastomère.

La bague intercalaire permet avantageusement d'améliorer l'étanchéité entre le châssis et l'insert amovible. En outre, la bague intercalaire permet une bonne adhérence entre le châssis et l'élément amovible.

La bague intercalaire comporte au moins un joint torique.

Un joint torique est un moyen simple et peu coûteux d'assurer l'étanchéité du dispositif.

Le châssis et/ou l'insert amovible peuvent comporter au moins une rainure annulaire, le joint torique étant configuré pour être inséré dans ladite au moins une rainure annulaire
Cela permet avantageusement de simplifier la manipulation du dispositif en assurant un maintien en place du joint torique lors de la pose et de la dépose de l'insert amovible.

La bague intercalaire peut comporter une collerette intercalaire apte à venir en butée contre ledit châssis.

La collerette intercalaire améliore avantageusement l'étanchéité du dispositif. En outre, la collerette intercalaire forme avantageusement une saille s'étendant au-delà de la surface de la cloison. Cela permet de faciliter la manipulation de la bague intercalaire et donc la pose et la dépose du dispositif. Par ailleurs, la présence d'une saillie s'étendant au-delà de la surface de la cloison est particulièrement avantageuse car elle permet de maintenir l'élément longitudinal hors de l'eau dans le cas où la cloison est une cloison horizontale immergée.

La collerette d'insert peut former un capuchon recouvrant la collerette intercalaire.

Ainsi, l'étanchéité du dispositif est améliorée et la collerette intercalaire est protégée de l'environnement extérieur. En outre, la collerette forme ici une saille s'étendant au-delà de la surface de la cloison et permettant de faciliter la pose et la dépose de l'insert amovible, et donc la manipulation du dispositif. Par ailleurs, la présence d'une saillie s'étendant au-delà de la surface de la cloison est particulièrement avantageuse car elle permet de maintenir l'élément longitudinal hors de l'eau dans le cas où la cloison est une cloison horizontale immergée.

Les différentes caractéristiques, variantes et formes de réalisation de l'invention peuvent être associées les unes avec les autres selon diverses combinaisons dans la mesure où elles ne sont pas incompatibles ou exclusives les unes des autres.

D'autres avantages et caractéristiques de l'invention apparaîtront à l'examen de la description détaillée de modes de réalisation de l'invention, nullement limitatifs, et des dessins annexés sur lesquels
la figure 1 est une vue en coupe d'un dispositif selon un mode de réalisation de l'invention, les différents éléments du dispositif étant séparés,
la figure 2 est une vue en coupe du dispositif de la figure 1, les différents éléments du dispositif étant assemblés de façon étanche,
la figure 3 est une vue en coupe d'un dispositif selon un mode de réalisation, comportant un joint torique. Ce mode de réalisation n'est pas compris dans le cadre des revendications ;
la figure 4 est une vue en coupe d'un insert amovible d'un dispositif selon un autre mode de réalisation qui n'est pas compris dans le cadre des revendications ;
la figure 5 est une vue en coupe d'un dispositif selon un mode de réalisation, comportant l'insert amovible de la figure 4. Ce mode de réalisation n'est pas compris dans le cadre des revendications ;
la figure 6 est une vue en coupe d'un insert amovible d'un dispositif selon un autre mode de réalisation qui n'est pas compris dans le cadre des revendications ;
la figure 7 est une vue en coupe d'un dispositif selon un mode de réalisation de, comportant l'insert amovible de la figure 6. Ce mode de réalisation n'est pas compris dans le cadre des revendications.

Il est à noter que sur ces figures les éléments structurels et/ou fonctionnels communs aux différentes variantes peuvent présenter les mêmes références.

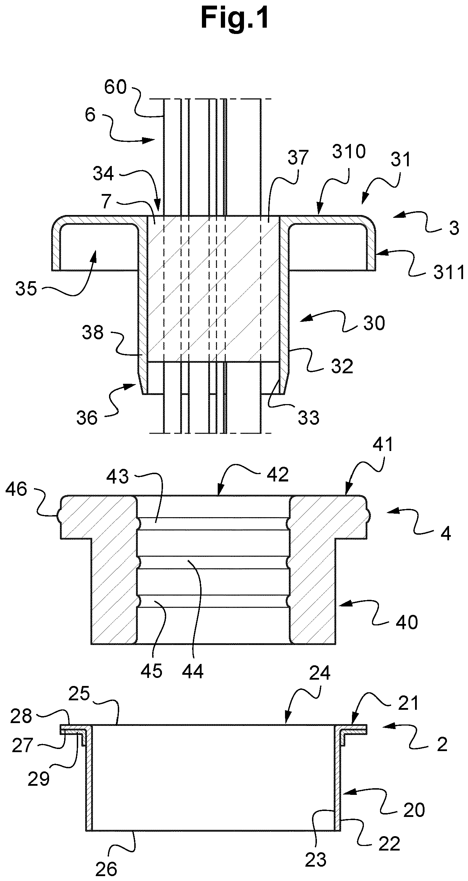

La figure 1 est une vue en coupe éclatée d'un dispositif 1 selon un mode de réalisation de l'invention. Le dispositif 1 est configuré pour permettre le passage étanche d'éléments longitudinaux, ici un faisceau 6 d'éléments longitudinaux. Par exemple ici, les éléments longitudinaux sont des fils électriques, c'est-à-dire des fils d'un matériau électriquement conducteur, ici du cuivre, entouré d'une gaine électriquement isolante, ici en matière plastique. A des fins de simplification, un seul fil électrique 60 est référencé sur les figures.

Le dispositif 1 comporte trois éléments distincts configurés pour être assemblés de façon étanche, ici un châssis 2, un insert amovible 3 et une bague intercalaire 4 assurant une liaison étanche entre le châssis 2 et l'insert amovible 3. Sur la figure 1, le châssis 2, l'insert amovible 3 et la bague intercalaire 4 sont séparés.

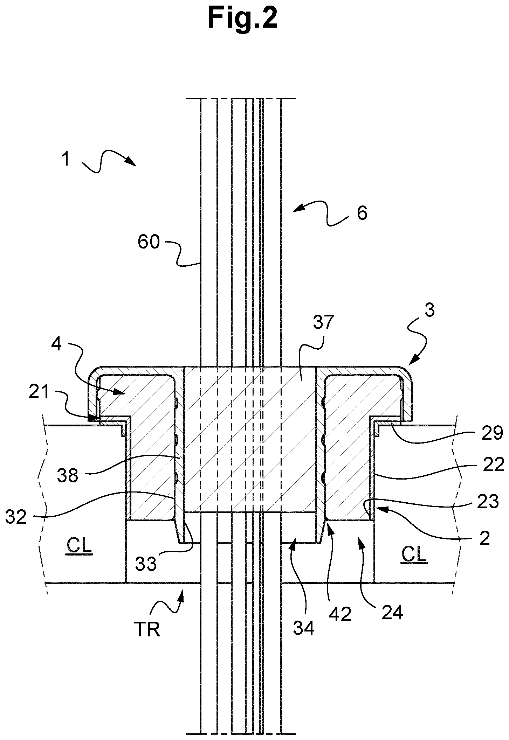

La figure 2 représente le même dispositif 1 dans lequel le châssis 2, l'insert amovible 3 et l'élément d'étanchéité 4 sont assemblés. Le châssis est engagé de façon étanche dans un trou débouchant TR d'une cloison CL, ici un trou de section circulaire, de façon à délimiter le trou TR. Par exemple ici, la cloison CL est une cloison séparant la cabine d'un bateau de l'extérieur.

Le châssis 2 est ici un châssis en métal, par exemple ici en acier inoxydable. Le châssis 2 pourrait toutefois être réalisé dans tout autre matériau étanche et résistant à l'eau, comme par exemple une matière plastique.

Le châssis 2 présente une forme de bague globalement cylindrique. Il comporte un premier corps 20 cylindrique prolongé par une collerette de châssis 21 et présente une première paroi externe 22 et une première paroi interne 23. La première paroi interne 23 délimite le trou TR et définit un premier passage 24 dans le châssis. Ici, le premier passage 24 a une forme de cylindre, et en particulier dans cet exemple une forme de cylindre de révolution. Il s'étend donc ici entre un premier orifice circulaire 25 et un deuxième orifice circulaire 26. En variante, le premier passage 24 pourrait avoir tout autre forme cylindrique.

Un cylindre est entendu ici comme un solide engendré par un segment de droite, dite droite génératrice, qui se déplace parallèlement à un axe entre deux plans fixes parallèles appelés bases du cylindre. Ainsi un cylindre peut avoir des bases discoïdales, des bases ellipsoïdales ou des bases de forme quelconque. Un cylindre peut être un prisme, c'est-à-dire qu'il peut avoir des bases polygonales. Un cylindre dont les bases sont perpendiculaires à la droite génératrice est un cylindre droit.

Ici, le premier passage 24 a une section circulaire dont le diamètre mesure 54 millimètres et s'étend longitudinalement sur une longueur de 47 millimètres. En variante, le premier passage 24 pourrait avoir tout autre diamètre et/ou tout autre longueur.

La collerette de châssis 21 est réalisée au niveau du premier orifice 25 et formée par un premier épaulement externe 27 de la première paroi externe 20 et par un premier épaulement interne 28 de la première paroi interne 21.

Le châssis 2 est configuré pour être inséré dans le trou TR de la cloison CL en faisant passer le premier corps 20 dans ledit trou TR de la cloison CL de façon, comme l'illustre la figure 2, que la première collerette 21 vienne en butée contre la cloison CL. Dans cet exemple, un joint à lèvre 29 est placé au niveau du premier épaulement externe 27 et permet de renforcer l'étanchéité entre le châssis 2 et la cloison CL. En variante, il serait possible que le châssis soit dépourvu de joint à lèvre et collé à la cloison par l'intermédiaire d'un matériau adhésif. Cela permettrait avantageusement de maintenir une bonne étanchéité quel que soit la qualité de surface présentée par la cloison CL et/ou présentée par le trou TR.

La bague intercalaire 4 est ici réalisée en caoutchouc naturel, mais pourrait être réalisée dans tout autre matériau élastique étanche, par exemple du mastic ou de la résine. Par exemple ici, la bague intercalaire a été réalisée par moulage et ne comporte donc qu'une seule pièce de matière.

La bague intercalaire 4 comporte un corps intercalaire 40. Le corps intercalaire 40 présente une forme complémentaire de la forme du premier passage 24 et est configuré pour être insérée de façon coaxiale dans le premier passage 24. Par exemple ici, la bague intercalaire 4 est de forme globalement cylindrique et le corps intercalaire 40 est un cylindre de révolution
Ici, le corps intercalaire 40 est prolongé par une collerette intercalaire 41. La collerette intercalaire présente ici une hauteur, c'est-à-dire une dimension prise dans le sens longitudinal, égale à 19 millimètres et un diamètre égal à 68 millimètres. Le corps intercalaire 40 de la bague intercalaire 4 a ici un diamètre légèrement supérieur au diamètre du premier passage 24, ici un diamètre de 54,5 millimètres. En variante, la bague intercalaire 4 pourrait être dépourvue de collerette.

Comme l'illustre la figure 2, l'élément intercalaire 4 est configuré pour être inséré dans le premier passage 24 en faisant passer le corps intercalaire 40 au travers du premier orifice 25 de façon que la collerette intercalaire 41 vienne en butée contre la collerette de châssis 21. Ainsi, le corps intercalaire 40 recouvre la première paroi interne 23 dans le premier passage 24 et les dimensions du corps intercalaire 40 et du premier passage 24 sont telles que lorsque la bague intercalaire 4 est insérée dans le premier passage 24, elle se déforme et exerce une pression par élasticité sur la première paroi interne 23. En d'autres termes, la bague intercalaire 4 est emmanchée à force dans le premier passage 24.

Cette force de pression assure que la bague intercalaire 4 soit plaquée contre la première paroi interne 23 et donc que l'étanchéité entre la bague intercalaire 4 et la première paroi interne 23 soit assurée. En outre, cette force de pression assure que la bague intercalaire 4 soit maintenue dans le premier passage 24 grâce aux forces de frottement entre le corps intercalaire 40 et la première paroi interne 23, à moins d'exercer sur la bague intercalaire une force de traction importante dans le sens longitudinal pour la sortir du premier passage 24, par exemple une force exercée par un homme adulte tirant à une main sur la bague intercalaire 4; une telle force peut par exemple être de 150 Newton.

En variante, afin d'assurer le maintien de la bague intercalaire dans le premier passage 24, la bague intercalaire 5 pourrait être collée à la première paroi interne 23 du châssis 2 par un matériau adhésif. Selon cette variante, la bague intercalaire pourrait avoir un diamètre égal au diamètre du premier passage. Cette variante est particulièrement avantageuse lorsque le dispositif est immergé pendant une durée prolongée, car il présente dans ce cas une meilleure étanchéité. La première paroi interne 23 pourrait comporter au moins une rainure circulaire entourant le premier passage 24 et dans laquelle une saillie circulaire correspondante de la bague intercalaire 4 viendrait se loger.

La bague intercalaire 4 comporte un passage intercalaire 42 de forme complémentaire de celle du premier passage 24, c'est-à-dire ici en forme de cylindre circulaire qui, lorsque la bague intercalaire 4 est insérée dans le premier passage 24, est coaxial au premier passage 24. Ici, le diamètre du passage intercalaire 42 est égal à 34 millimètres.

L'insert amovible 3 comporte une partie centrale 37 entourée ici par une partie tubulaire 38.

La partie centrale 37 comporte ici un matériau élastomère, ici du caoutchouc, épousant de façon intime la partie tubulaire 38 et les fils électriques du faisceaux 6. Ici, la partie centrale 37 est moulée dans la partie tubulaire 38 autour des fils électriques du faisceau 6.

La partie tubulaire 38 est ici une cloison en métal, par exemple ici en acier inoxydable. La partie tubulaire 38 pourrait toutefois être réalisée dans tout autre matériau étanche et résistant à l'eau, comme par exemple une matière plastique. En particulier, la partie tubulaire 38 et le châssis 2 pourraient être réalisés dans des matériaux différents.

La partie tubulaire 38 définit un deuxième corps 30 cylindrique comportant une deuxième paroi externe 32 et une deuxième paroi interne 33. La deuxième paroi interne 33 définit un deuxième passage 34. Ici, le deuxième passage 34 présente une forme de cylindre de révolution mais pourrait avoir tout autre forme.

Le deuxième corps 30 a une forme complémentaire de celle du premier passage 24 et du passage intercalaire 42, ici une forme de cylindre de révolution. Ici, le deuxième corps 30 présente un diamètre externe inférieur à celui du premier passage 24 et légèrement supérieure à celui du passage intercalaire 42, c'est-à-dire un diamètre externe égal à 34,5 millimètres.

Ainsi, comme l'illustre la figure 2, lorsque l'insert amovible 3 est inséré dans le passage intercalaire 42 de façon coaxiale audit passage intercalaire 42, la bague intercalaire 4 est compressée entre la première paroi interne 23 et la deuxième paroi externe 32 et exerce par élasticité sur ces deux parois une force de façon à assurer l'étanchéité entre l'insert amovible 3 et la bague intercalaire 4 d'une part, et entre la bague intercalaire 4 et le châssis 2 d'autre part.

En variante, il serait possible que le passage intercalaire 42 et le deuxième corps 30 aient des formes complémentaires mais différentes de celle du premier passage 24, par exemple des formes prismatiques. Des formes complémentaires permettent une meilleure homogénéité des forces élastiques exercées par la bague intercalaire 4 sur l'insert amovible 3 et sur le châssis 2, et donc une meilleure étanchéité du dispositif 1.

Dans le mode de réalisation illustré, la bague intercalaire comporte trois saillies circulaires 43, 44, 45 entourant le passage intercalaire 42. Ces trois saillies permettent la réalisation de trois zones de pression annulaires sur l'insert amovible 3, ce qui contribue à la bonne étanchéité de la liaison entre l'insert amovible 3 et la bague intercalaire 4. En variante, la bague intercalaire pourrait comporter un nombre différent de saillies circulaire ou ne comporter aucune saillie circulaire.

Dans ce mode de réalisation, le deuxième corps 30 est prolongée par une collerette d'insert 31, formée par un prolongement de la partie tubulaire 38 au niveau d'une première extrémité du deuxième corps 30.

La collerette d'insert 31 comporte une première partie proximale 310 s'étendant radialement vers l'extérieur de l'insert amovible 3 depuis le deuxième corps 30 et une partie distale 311 s'étendant depuis la partie proximale 310 le long du deuxième corps 30 de façon coaxiale avec le deuxième corps 30. En d'autres termes, la collerette d'insert 31 est recourbée de façon à former une cavité annulaire 35 coaxiale avec le deuxième corps 30. Ici, la hauteur de la cavité annulaire 35, c'est-à-dire la dimension de la partie distale 311 de la collerette d'insert 31 prise dans le sens longitudinal, est égale à la hauteur de la collerette intercalaire 41, c'est-à-dire ici 19 millimètres.

Et, le diamètre maximal de la cavité annulaire 35, c'est-à-dire le diamètre de la cavité annulaire 35 pris au niveau de la partie distale 311, est ici légèrement inférieure au diamètre de la collerette intercalaire 41, c'est-à-dire ici égal à 67,5 millimètres. En variante, il serait possible que la hauteur de la cavité annulaire 35 soit inférieure à la hauteur de la collerette intercalaire 41 et/ou que le diamètre maximal de la cavité annulaire 35 soit égale ou supérieure au diamètre de la collerette intercalaire 41.

Ainsi dans l'exemple illustré, lorsque l'insert amovible 3 est inséré de façon coaxiale dans le passage intercalaire 42, la collerette d'insert 31 recouvre et compresse radialement la collerette intercalaire 41 entre le deuxième corps 30 et la partie distale 311. En d'autres termes, la collerette d'insert 31 forme ici un capuchon recouvrant la collerette intercalaire 41. La collerette intercalaire 41 exerce par élasticité des forces radiales sur la deuxième paroi externe 32.

Dans le mode de réalisation illustré, la bague intercalaire comporte une saillie circulaire 46 entourant la collerette intercalaire 41. Cette saillie permet la réalisation d'une zone de pression annulaire sur la paroi de la cavité annulaire 35, ce qui contribue à la bonne étanchéité de la liaison entre l'insert amovible 3 et la bague intercalaire 4. En variante, la bague intercalaire 4 pourrait comporter un nombre différent de saillies circulaire ou ne comporter aucune saillie circulaire.

En outre, la collerette d'insert 31 fait office de butée pour limiter la course d'insertion de l'insert amovible 3 dans le trou TR. Dans cette exemple la deuxième paroi externe 32 au niveau de partie proximale 310 vient en butée contre la bague intercalaire 4, mais il serait possible, dans le cas où la hauteur de la cavité annulaire 35 est supérieure à la hauteur de la collerette intercalaire 41, que la partie distale 311 vienne en butée contre la collerette de châssis 21 ou directement contre la cloison CL.

En variante, il serait possible que la collerette d'insert 31 ne comporte que la partie proximale 310, c'est-à-dire que la collerette d'insert 31 pourrait être simplement formée par une deuxième butée externe de la deuxième paroi externe 32, et ne définirait donc pas de cavité annulaire.

Dans l'exemple illustré ici, une deuxième extrémité du deuxième corps 30, opposée à la première extrémité du deuxième corps 30, c'est-à-dire opposée à l'extrémité depuis laquelle s'étend la deuxième collerette 31, comporte un chanfrein 36 permettant une insertion facilitée de l'insert amovible 3 dans le premier passage 24, et plus précisément ici dans le passage intercalaire 42.

Ainsi, lorsqu'il est nécessaire d'accéder au trou TR, il est avantageusement possible de sortir l'insert amovible 3 du premier passage 24 sans dégrader le dispositif et de façon manuelle, c'est-à-dire sans utiliser d'outil.

Eventuellement, afin de retirer ou d'ajouter un ou plusieurs fils électriques du faisceau 6, il est possible de retirer la partie centrale et de faire passer le nouveau fil au travers du deuxième passage 34 et du premier passage 24, c'est-à-dire ici également au travers du passage intercalaire 42 de la bague intercalaire restée en place. Pour reformer la partie centrale, il est possible de couler à nouveau un matériau étanche dans le deuxième passage 42 et de replacer l'insert amovible 3. Ainsi, le nouvel insert amovible est parfaitement adapté au nouveau faisceau.

En variante, il se pourrait que le dispositif 1 soit configuré de tel manière que les forces de frottement ou d'adhésion entre la bague intercalaire et la deuxième paroi externe 32 soit supérieures aux forces de frottement ou d'adhésion entre la bague intercalaire 4 et la première paroi interne 23. Dans ce cas, la bague intercalaire resterait solidaire de l'insert amovible lors du retrait de l'insert amovible.

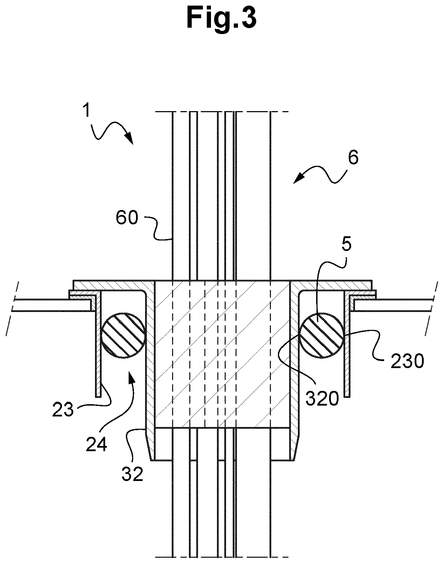

Selon une variante de réalisation qui n'est pas couverte par le texte des revendications, la bague intercalaire pourrait prendre la forme d'un joint torique. Ainsi, comme l'illustre la figure 3, la bague intercalaire comporte ici un joint torique 5 compressé entre la première paroi interne 23 et la deuxième paroi externe 32.

Par exemple ici, la première paroi interne 23 comprend une première rainure annulaire 230 entourant le premier passage 24 et dans laquelle le joint torique vient se loger, et la deuxième paroi externe 32 comporte une deuxième rainure annulaire 320 correspondante dans laquelle le joint torique 8 vient se loger.

En variante, il serait possible que la première paroi interne 23 ne comporte pas la première rainure annulaire 230 et/ou que la deuxième paroi externe 32 ne comporte pas la deuxième rainure annulaire 320.

En outre, il serait tout à fait possible que le dispositif 1 comporte une pluralité de joints toriques, par exemple trois joints toriques et que l'insert amovible 3 et/ou le châssis 2 comportent une pluralité de rainures annulaires correspondantes.

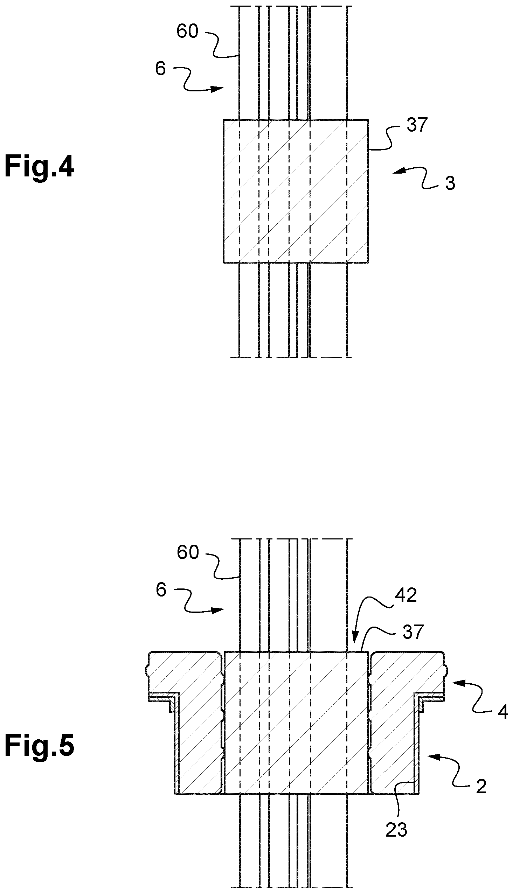

Selon un mode de réalisation alternatif, non couvert par le texte des revendications, il serait possible, comme l'illustre la figure 4, que l'insert amovible 3 comprenne uniquement la partie centrale 37 et soit dépourvu de la partie tubulaire décrite précédemment.

Selon ce mode de réalisation alternatif, non couvert par le texte des revendications, l'insert amovible est réalisé par moulage de la partie centrale sur les fils du faisceau 6, dans un moule cylindrique provisoire (non représenté) retiré après le moulage de l'insert amovible 3. Ici, la partie centrale 37 présente un diamètre légèrement supérieur au diamètre du passage intercalaire 42, ici un diamètre de 34,5 millimètres.

Ainsi, comme l'illustre la figure 5, lorsque l'insert amovible 3 est inséré dans le passage intercalaire 42 de façon coaxiale audit passage intercalaire 42, la bague intercalaire 4 est compressée entre la première paroi interne 23 et la partie centrale 37 et assure par élasticité l'étanchéité entre l'insert amovible 3 et la bague intercalaire 4 d'une part, et entre la bague intercalaire 4 et le châssis 2 d'autre part.

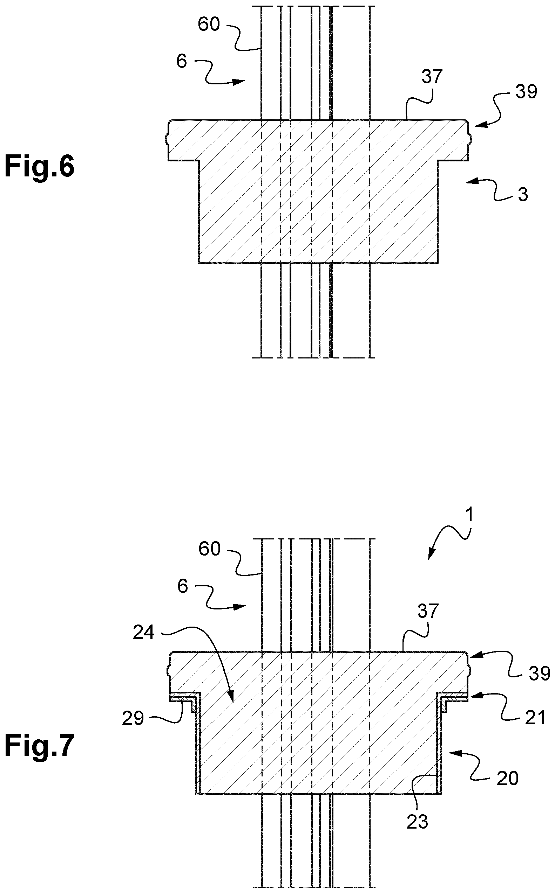

Un autre mode de réalisation, non couvert par le texte des revendications, est illustré sur les figures 6 et 7.

Comme illustré par la figure 6, la collerette d'insert comporte un épaulement 39 de la partie centrale réalisé lors du moulage de la partie centrale 37. Selon ce mode de réalisation, l'insert amovible 3 ne comporte pas la partie tubulaire décrite précédemment.

Comme l'illustre la figure 7, le dispositif 1 est dépourvu de bague intercalaire et, lorsque l'insert amovible 3 est inséré dans le premier passage 24 de façon coaxiale au premier passage 24, l'insert amovible 3 est compressé dans le premier passage 24 et exerce sur la première paroi interne 23 une force par élasticité de façon à assurer l'étanchéité entre la première paroi interne 23 et l'insert amovible 3. Ici, l'épaulement 39 limite avantageusement la profondeur d'insertion de l'insert amovible 3 dans le premier passage 24 en venant buter contre la collerette de châssis 21. En outre, l'épaulement 39 contribue à l'étanchéité du dispositif 1.

Diverses autres modifications peuvent être apportées à l'invention pour autant qu'elle soient comprises dans le cadre des revendications annexées.

## Revendications

1. Dispositif pour le passage étanche d'au moins un élément longitudinal (60) au travers d'un trou débouchant (TR) ménagé dans une cloison (CL), comportant
- l'élément longitudinal (60),
- un châssis (2) apte à être fixé à demeure et de façon étanche sur la cloison pour délimiter ledit trou (TR),
- un insert amovible (3) dont au moins une partie centrale (37) est réalisée par moulage sur ledit élément longitudinal (60) pour réaliser une liaison étanche avec ce dernier, l'insert amovible (3) étant configuré pour être inséré de façon amovible et étanche dans ledit châssis (2), l'insert amovible (3) comportant une partie tubulaire (38) qui entoure la partie centrale (37) et dans laquelle la partie centrale (37) est moulée, la partie tubulaire (38) restant à demeure autour de la partie centrale (37) après moulage de la partie centrale (37) et formant une liaison étanche avec le châssis (2) lors de l'insertion de l'insert amovible (3),
**caractérisé en ce qu'**au moins une bague intercalaire (4) est disposée entre le châssis (2) et l'insert amovible (3), la bague intercalaire étant configurée pour assurer l'étanchéité entre le châssis (2) et l'insert amovible (3) et comportant une collerette intercalaire (41) apte à venir en butée contre ledit châssis (2).

2. Dispositif selon la revendication 1, dans lequel l'insert amovible (3) comporte une collerette d'insert (31) formant butée pour limiter la course d'insertion de l'insert amovible (3) dans le trou (TR).

3. Dispositif selon la revendication 2 dans lequel la collerette d'insert (31 ; 39) comporte un prolongement de ladite partie tubulaire (38).

4. Dispositif selon l'une quelconque des revendications précédentes, dans lequel le châssis (2) comporte une collerette de châssis (21) apte à venir en butée contre ladite cloison (CL).

5. Dispositif selon l'une quelconque des revendications précédentes, dans lequel la bague intercalaire (4) est réalisée dans un matériau élastomère.

6. Dispositif selon la revendication l'une quelconque des revendications précédentes en combinaison avec la revendication 3, dans lequel la collerette d'insert (31) forme un capuchon configuré pour recouvrir la collerette intercalaire (41).

## Patentansprüche

1. Vorrichtung für einen dichten Durchgang mindestens eines länglichen Elements (60) durch ein in eine Wand (CL) eingebrachtes Durchgangsloch (TR) mit
- dem länglichen Element (60),
- einem Rahmen (2), der dafür ausgelegt ist, dauerhaft und dicht an der Wand befestigt zu sein, um das Loch (TR) einzugrenzen,
- einem herausnehmbaren Einsatz (3), von dem mindestens ein zentraler Teil (37) durch Formen auf dem länglichen Element (60) gebildet ist, um eine dichte Verbindung mit letzterem herzustellen, wobei der herausnehmbare Einsatz (3) dazu ausgelegt ist, herausnehmbar und dicht in den Rahmen (2) eingesetzt zu werden, wobei der herausnehmbare Einsatz (3) einen rohrförmigen Teil (38) aufweist, der den zentralen Teil (37) umgibt und in dem der zentrale Teil (37) geformt ist, wobei der rohrförmige Teil (38) nach dem Formen des zentralen Teils (37) um den zentralen Teil (37) herum verbleibt und beim Einsetzen des herausnehmbaren Einsatzes (3) eine dichte Verbindung mit dem Rahmen (2) bildet,
**dadurch gekennzeichnet, daß** mindestens ein Zwischenring (4) zwischen dem Rahmen (2) und dem herausnehmbaren Einsatz (3) angeordnet ist, wobei der Zwischenring dazu ausgelegt ist, die Dichtigkeit zwischen dem Rahmen (2) und dem herausnehmbaren Einsatz (3) sicherzustellen, und einen Zwischenkragen (41) aufweist, der dazu ausgelegt ist, an dem Rahmen (2) anzuliegen.

2. Vorrichtung gemäß Anspruch 1, bei der der herausnehmbare Einsatz (3) einen Einsatzkragen (31) aufweist, der einen Anschlag bildet, um die Einsetztiefe des herausnehmbaren Einsatzes (3) in das Loch (TR) zu begrenzen.

3. Vorrichtung gemäß Anspruch 2, bei der der Einsatzkragen (31; 39) eine Verlängerung des rohrförmigen Teils (38) aufweist.

4. Vorrichtung gemäß einem der vorangehenden Ansprüche, bei der der Rahmen (2) einen Rahmenkragen (21) aufweist, der dazu ausgelegt ist, an der Wand (CL) anzuliegen.

5. Vorrichtung gemäß einem der vorangehenden Ansprüche, bei der der Zwischenring (4) aus einem Elastomermaterial gefertigt ist.

6. Vorrichtung gemäß einem der vorangehenden Ansprüche in Verbindung mit Anspruch 3, bei der der Einsatzkragen (31) eine Kappe bildet, die dazu ausgelegt ist, den Zwischenkragen (41) abzudecken.

## Claims

1. A device for the sealed passage of at least one longitudinal element (60) through a through-hole (TR) provided in a partition (CL), comprising:
- the longitudinal element (60),
- a frame (2) capable of being fastened in a permanent and sealed manner on the partition in order to delimit said hole (TR),
- a removable insert (3), at least a central portion (37) of which is made by moulding on said longitudinal element (60) in order to produce a sealed connection with the latter, the removable insert (3) being configured to be inserted in a removable and sealed manner into said frame (2), the removable insert (3) comprising a tubular portion (38) that surrounds the central portion (37) and in which the central portion (37) is moulded, the tubular portion (38) remaining permanently around the central portion (37) after moulding of the central portion (37) and forming a sealed connection with the frame (2) when the removable insert (3)is inserted,
- at least a spacer ring (4;5) arranged between the frame (2) and the removable insert (3), configured to ensure the seal between the frame (2) and the removable insert (3) and including a spacer collar (41) adapted to come into abutment against said frame (2).

2. The device according to claim 1, wherein the removable insert (3) comprises an insert collar (31; 39) forming a stop to limit the insertion travel of the removable insert (3) into the hole (TR).

3. The device according to claim 2, wherein the insert collar (31; 39) comprises an extension of said tubular part (38).

4. The device according to any claim 1, wherein the frame (2) comprises a frame collar (21) adapted to come into abutment against said partition (CL).

5. The device according to claim 1, wherein the spacer ring is made of an elastomeric material.

6. The device according to any one of the preceding claims in combination with claim 3, wherein the insert collar (31; 39) forms a cap configured to cover the spacer collar (41).
